# EUROPEAN PATENT APPLICATION

(11) **EP 4 575 264 A1**
(43) Date of publication of application: **25.06.2025**
(21) Application number: 23945619.7
(22) Date of filing: 26.10.2023
(51) Int. Cl.: F16H 3/089, B60K 17/08, F16H 3/087, F16H 1/32, F16H 57/08, F16H 57/021, B60K 17/04

(54) **TWO-GEAR DRIVING ASSEMBLY AND NEW ENERGY VEHICLE**

(30) Priority: 18.07.2023 CN 202310880041
(71) Applicant: Jing-Jin Electric Technologies Co., Ltd, Beijing 100023 (CN)
(72) Inventor: LI, Jianwen, Beijing 100023 (CN); CHEN, Zhengguang, Beijing 100023 (CN); WANG, Ruikun, Beijing 100023 (CN); YU, Ping, Beijing 100023 (CN); ZHANG, Zhiqin, Beijing 100023 (CN)
(74) Representative: Schwarz & Partner Patentanwälte GmbH
(86) International application number: PCT/CN2023/126714
(87) International publication number: WO 2025/015738

(57) **Abstract**

A two-speed drive assembly and a new energy vehicle are disclosed. The two-speed drive assembly comprises a drive source (1), a transmission mechanism and a reduction mechanism. The transmission mechanism comprises an input shaft (2), an intermediate shaft (3) and an output shaft (4) that are arranged in parallel, the input shaft (2) is connected to the drive source (1) for transmission, the input shaft (2) is provided thereon with a first gear (5), the intermediate shaft (3) is provided thereon with a second gear (6), a third gear (7) and a fourth gear (8), the output shaft (4) is provided thereon with a fifth gear (9) and a sixth gear (10), the first gear (5) and the second gear (6) are meshed for transmission, the third gear (7) and the fifth gear (9) are meshed for transmission, the fourth gear (8) and the sixth gear (10) are meshed for transmission, the third gear (7) and the intermediate shaft (3) are connected for transmission via a clutch or the fifth gear (9) and the output shaft (4) are connected for transmission via a clutch, the fourth gear (8) and the intermediate shaft (3) are connected for transmission via a clutch or the sixth gear (10) and the output shaft (4) are connected for transmission via a clutch. The reduction mechanism is sleeved on the output shaft (4) and connected to a differential (11) for transmission. The two-speed drive assembly has advantages such as large output torque, compact structure, high transmission efficiency, good NVH performance and low production cost.

## Description

### Cross-reference to related applications

This application claims priority to the Chinese patent application No. 202310880041.3 filed with the Chinese Patent Office on July 18, 2023 and entitled "Two-Gear Driving Assembly and New Energy Vehicle", which is incorporated by reference herein in its entirety.

### TECHNICAL FIELD

The present disclosure belongs to the technical field of new energy vehicles, and specifically relates to a two-speed drive assembly and a new energy vehicle.

### BACKGROUND

The drive assembly of a new energy vehicle is generally composed of a motor and a reducer. The motor first converts electrical energy into mechanical energy to provide power for the vehicle, and then reduces the motor speed by the reducer while amplifying the output torque of the motor, thereby achieving the effect of decreasing the speed and increasing the torque, so that the drive assembly can operate within a certain rotational speed range and under a certain driving torque.

At present, the drive assemblies in new energy vehicles mostly use a motor and a reducer with a fixed gear ratio. In order to meet the maximum speed requirement of the whole vehicle, the motor speed should be adjustable within a large range. In order to meet the power requirement of the vehicle, a large power motor needs to be selected to match with the whole vehicle, which increases the production cost of the drive assembly. Moreover, if a reducer with a fixed gear ratio is used to match with the motor, when the vehicle is running at low speed or high speed, the vehicle speed can be adjusted only by adjusting the motor speed. Thus, the output torque and power of the motor are required to be high when the vehicle is running at low speed or starting, and the maximum motor speed is required to be high when the vehicle is running at high speed. The high-speed operation of the motor will bring about many problems such as those of NVH (Noise, Vibration, Harshness), sealing and durability.

### SUMMARY

In view of the above problems, the present disclosure discloses a two-speed drive assembly and a new energy vehicle to overcome or at least partially solve the above problems.

In order to achieve the above object, the present disclosure adopts the following technical solutions.

An aspect of the present disclosure provides a two-speed drive assembly, comprising: a drive source, a transmission mechanism and a reduction mechanism;
the transmission mechanism comprises an input shaft, an intermediate shaft and an output shaft that are arranged in parallel, the input shaft is connected to the drive source for transmission, the input shaft is provided thereon with a first gear, the intermediate shaft is provided thereon with a second gear, a third gear and a fourth gear, the output shaft is provided thereon with a fifth gear and a sixth gear, the first gear and the second gear are meshed for transmission, the third gear and the fifth gear are meshed for transmission, the fourth gear and the sixth gear are meshed for transmission, the third gear and the intermediate shaft are connected for transmission via a clutch or the fifth gear and the output shaft are connected for transmission via a clutch, the fourth gear and the intermediate shaft are connected for transmission via a clutch or the sixth gear and the output shaft are connected for transmission via a clutch;
the reduction mechanism is sleeved on the output shaft and connected to the differential for transmission.

Further, an output shaft of the drive source and the input shaft of the transmission mechanism are an integrated structure.

Further, the output shaft is a hollow shaft, and is sleeved on an output half shaft on a side of the differential.

Further, the reduction mechanism comprises a sun gear, a planetary gear, a ring gear and a planetary carrier;
the sun gear is sleeved on the output shaft, the ring gear is coaxially sleeved on an outer side of the sun gear, the planetary gear is arranged between the sun gear and the ring gear and is respectively meshed with the sun gear and the ring gear, the planetary gear is connected to the planetary carrier via a planetary shaft, and the planetary carrier is connected to a housing of the differential.

Further, the planetary carrier and the housing of the differential are an integrated structure.

Further, the third gear and the intermediate shaft are connected for transmission via a first clutch, and a first needle bearing is provided between the third gear and the intermediate shaft; the sixth gear and the output shaft are connected for transmission via a second clutch, and a second needle bearing is provided between the sixth gear and the output shaft.

Further, the connection between the first gear and the input shaft, between the second gear and the intermediate shaft, between the fourth gear and the intermediate shaft, and between the fifth gear and the output shaft are all by splines.

Further, the fifth gear and the output shaft are connected for transmission via a first clutch, and a first needle bearing is provided between the fifth gear and the output shaft; the sixth gear and the output shaft are connected for transmission via a second clutch, and a second needle bearing is provided between the sixth gear and the output shaft.

Further, a third clutch is provided between the housing of the differential and an output half shaft on a side of the differential.

Another aspect of the present disclosure provides a new energy vehicle, which uses the two-speed drive assembly as described above.

The advantages and beneficial effects of the present disclosure are as follows.

In the two-speed drive assembly of the present disclosure, by providing the input shaft, the intermediate shaft and the output shaft that are arranged in parallel, a two-stage speed reduction at two gear positions with different gear ratios is realized; moreover, by providing a reduction mechanism between the output shaft and the differential, the two-speed drive assembly can output power with a high transmission ratio, and the requirements for the power, torque and maximum speed of the motor are reduced while the requirements of the maximum speed and power of the vehicle can be satisfied, thereby reducing the cost of the two-speed electric drive assembly and avoiding the NVH, sealing and durability problems caused by the high-speed operation of the motor. The two-speed drive assembly has advantages such as large output torque, compact structure, small space occupation, high transmission efficiency, good NVH performance and low production cost.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a schematic view of the structure of a two-speed drive assembly at a first gear position in an embodiment of the present disclosure; and
FIG. 2 is a schematic view of the structure of a two-speed drive assembly at a second gear position in an embodiment of the present disclosure.

In the drawings: 1, drive source; 2, input shaft; 3, intermediate shaft; 4, output shaft; 5, first gear; 6, second gear; 7, third gear; 8, fourth gear; 9, fifth gear; 10, sixth gear; 11, differential; 12, sun gear; 13, planetary gear; 14, ring gear; 15, planetary carrier; 16, first clutch; 17, first needle bearing; 18, second clutch; 19, second needle bearing; 20, third clutch; 21, left output half shaft; 22, right output half shaft.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The technical solutions provided by various embodiments of the present disclosure will be described in detail with reference to the accompanying drawings.

### First Embodiment

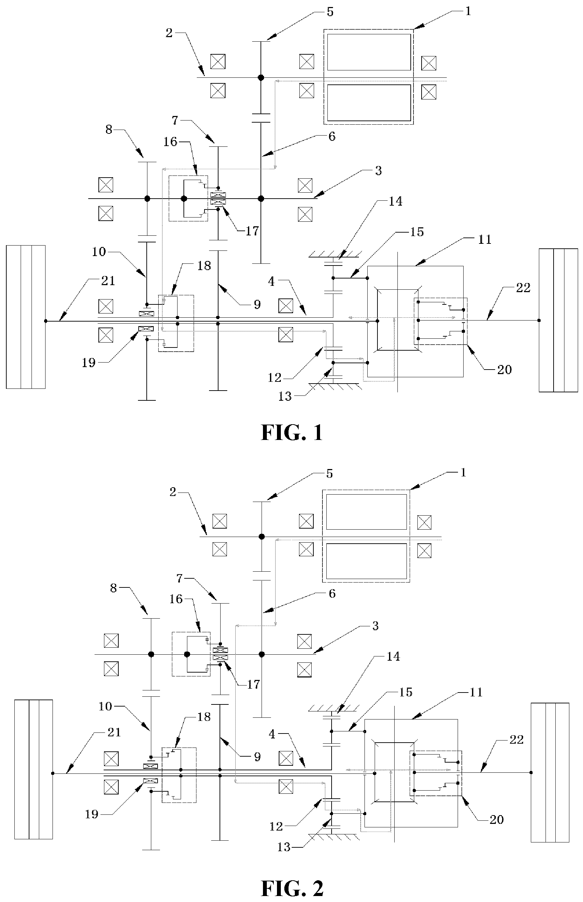

A two-speed drive assembly is disclosed in this embodiment. As shown in FIGS. 1 and 2, the two-speed drive assembly comprises a drive source 1, a transmission mechanism and a reduction mechanism. The drive source may be an electric motor or an engine.

Specifically, the transmission mechanism comprises an input shaft 2, an intermediate shaft 3 and an output shaft 4 that are arranged in parallel. The input shaft 2 is connected to the driving source 1 for transmission. The input shaft 2 is provided thereon with a first gear 5. The intermediate shaft 3 is provided thereon with a second gear 6, a third gear 7 and a fourth gear 8. The output shaft 4 is provided thereon with a fifth gear 9 and a sixth gear 10. The first gear 5 and the second gear 6 are meshed for transmission, the third gear 7 and the fifth gear 9 are meshed for transmission, and the fourth gear 8 and the sixth gear 10 are meshed for transmission. The third gear 7 and the intermediate shaft 3 are transmission connected via a first clutch 16, and a first needle bearing 17 is provided between the third gear 7 and the intermediate shaft 3. The sixth gear 10 and the output shaft 4 are transmission connected via a second clutch 18, and a second needle bearing 19 is provided between the sixth gear 10 and the output shaft 4. Moreover, the connection between the first gear 5 and the input shaft 2, the second gear 6 and the intermediate shaft 3, the fourth gear 8 and the intermediate shaft 3, and the fifth gear 9 and the output shaft 4 are all by splines.

The transmission ratio of the third gear 7 and the fifth gear 9 is different from the transmission ratio of the fourth gear 8 and the sixth gear 10, and two speed ratio outputs are realized. That is, by controlling the first clutch 16 and the second clutch 18, the intermediate shaft 3 and the output shaft 4 can be meshed for transmission via the third gear 7 and the fifth gear 9 or via the fourth gear 8 and the sixth gear 10, thereby realizing the switching of low speed gear and high speed gear, and further satisfying different working conditions. Moreover, the transmission of the input shaft 2 and the intermediate shaft 3 is realized by the meshing of the first gear 5 and the second gear 6, and the transmission of the intermediate shaft 3 and the output shaft 4 is realized by the meshing of the third gear 7 and the fifth gear 9 or the meshing of the fourth gear 8 and the sixth gear 10, and thus two-stage speed reduction can be achieved.

In addition, the reduction mechanism is sleeved on the output shaft 4 and is connected to a differential 11 for transmission, and the power is transmitted to a left output half shaft 21 and a right output half shaft 22 via the differential 11, thereby driving the wheels to rotate and realizing power output.

In the two-speed drive assembly of this embodiment, by providing the input shaft, the intermediate shaft and the output shaft that are arranged in parallel, a two-stage speed reduction at two gear positions with different gear ratios is realized; moreover, by providing a reduction mechanism between the output shaft and the differential, the two-speed drive assembly can output power with a high transmission ratio, and the requirements for the power, torque and maximum speed of the motor are reduced while the requirements of the maximum speed and power of the vehicle can be satisfied, thereby reducing the cost of the two-speed electric drive assembly and avoiding the NVH, sealing and durability problems caused by the high-speed operation of the motor. The two-speed drive assembly has advantages such as large output torque, compact structure, small space occupation, high transmission efficiency, good NVH performance and low production cost.

In this embodiment, an output shaft of the drive source and the input shaft of the transmission mechanism are an integrated structure, so that when the power is transmitted, the impact of the output shaft of the drive source on the transmission mechanism can be reduced, and the transmission loss can be reduced. In other embodiments of the present disclosure, alternatively, the output shaft of the drive source may be connected to the input shaft of the transmission mechanism via a coupling.

In addition, as shown in FIGS. 1 and 2, the output shaft 4 is a hollow shaft, and is sleeved on the left output half shaft 21 on the left side of the differential 11, so that the output shaft 4 can rotate relative to the left output half shaft 21 while maintaining relatively stationary in the axial direction. Of course, alternatively, the output shaft may be sleeved on the right output half shaft on the right side of the differential, which is also within the protection scope of the present disclosure. By designing that the output shaft is sleeved on the output half shaft on a side of the differential, the original space of the differential can be fully utilized, so that the longitudinal volume of the two-speed drive assembly when it cooperates with the differential is smaller.

Further, the reduction mechanism comprises a sun gear 12, a planetary gear 13, a ring gear 14 and a planetary carrier 15.

Specifically, the sun gear 12 is sleeved on the output shaft 4; the ring gear 14 is coaxially sleeved on the outside of the sun gear 12, and can be fixedly connected to the housing of the transmission mechanism; the planetary gear 13 is arranged between the sun gear 12 and the ring gear 14, and meshes with the sun gear 12 and the ring gear 14 respectively, the planetary gear 13 is connected to the planetary carrier 15 via the planetary shaft, and the planetary carrier 15 is connected to the housing of the differential 11. In this way, the power on the output shaft 4 is transmitted to the housing of the differential 11 via the sun gear 12, the planetary gear 13 and the planetary carrier 15 in sequence, and the two-speed drive assembly can achieve a large torque output by controlling the transmission ratio of the planetary gear 13 and the sun gear 12. There are multiple, preferably three or four, planetary gears.

Moreover, the planetary carrier and the housing of the differential are integrally manufactured and formed, which is convenient for the assembly of the two-speed drive assembly and makes the connection structure between the planetary carrier and the housing of the differential simpler and firmer. Of course, in other embodiments, alternatively, the planetary carrier and the housing of the differential may be separate structures, which are processed and manufactured separately, and then fixedly connected by screw/bolt connection or welding. The separate planetary carrier and housing of the differential are easier to manufacture and process.

In addition, a third clutch 20 is provided between the housing of the differential 11 and the right output half shaft 22 on the right side of the differential 11. When the third clutch 20 is engaged, the housing of the differential 11 and the right output half shaft 22 are locked, thereby realizing the locking of the differential 11. In this way, when a wheel on one side slips or cannot contact the road surface, the differential can be locked by the third clutch, so that the power is transmitted to the wheels that have adhesion to the road surface, thereby getting the car off trouble. Of course, alternatively, the third clutch may be provided between the housing of the differential and the left output half shaft.

The specific working process of the two-speed drive assembly in this embodiment is as follows.

The implementation process at the first gear position is as follows. As shown in FIG. 1, the first clutch 16 is controlled to disengage, and the second clutch 18 is controlled to engage. At this point, the power is generated by the driving source 1 and transmitted to the first gear 5 via the input shaft 2. The first gear 5 is meshed with the second gear 6 to transmit the power to the intermediate shaft 3, thereby realizing a first-stage speed reduction. The intermediate shaft 3 drives the fourth gear 8 to rotate, and the fourth gear 8 is meshed with the sixth gear 10 to transmit the power to the output shaft 4, thereby realizing a second-stage speed reduction. The output shaft 4 transmits the power to the planetary carrier 15 via the sun gear 12 and the planetary gear 13 in sequence, thereby realizing planetary speed reduction and torque increase. The planetary carrier 15 drives the housing of the differential 11 to rotate, and the power is transmitted to the wheels via the left output axle 21 and the right output axle 22, thereby realizing the driving state at the first gear position.

The implementation process at the second gear position is as follows. As shown in FIG. 2, the first clutch 16 is controlled to engage, and the second clutch 18 is controlled to disengage. At this point, the power is generated by the driving source 1 and transmitted to the first gear 5 via the input shaft 2. The first gear 5 is meshed with the second gear 6 to transmit the power to the intermediate shaft 3, thereby realizing a first-stage speed reduction. The intermediate shaft 3 drives the third gear 7 to rotate, and the third gear 7 is meshed with the fifth gear 9 to transmit the power to the output shaft 4, thereby realizing a second-stage speed reduction. The output shaft 4 transmits the power to the planetary carrier 15 via the sun gear 12 and the planetary gear 13 in sequence, thereby realizing planetary speed reduction and torque increase. The planetary carrier 15 drives the housing of the differential 11 to rotate, and the power is transmitted to the wheels via the left output half shaft 21 and the right output half shaft 22, thereby realizing the driving state at the second gear position.

### Second Embodiment

This embodiment differs from the first embodiment in that, the fifth gear is connected to the output shaft for transmission via the first clutch, and a first needle bearing is provided between the fifth gear and the output shaft; the sixth gear is connected to the output shaft for transmission via the second clutch, and a second needle bearing is provided between the sixth gear and the output shaft. In this way, when the two-speed drive assembly is idling, the load of the drive source can be reduced and energy consumption can be reduced.

Of course, in other embodiments, alternatively, the third gear and the intermediate shaft may be connected for transmission via the first clutch, and the fourth gear and the intermediate shaft may be connected for transmission via the second clutch.

### Third Embodiment

This embodiment discloses a new energy vehicle, which uses the two-speed drive assembly in the above embodiments, and has advantages such as sufficient output power, low production cost and good NVH performance.

The above merely describes particular embodiments of the present disclosure. By the teaching of the present disclosure, a person skilled in the art can make other modifications or variations based on the above embodiments. A person skilled in the art should appreciate that, the detailed description above is only for the purpose of explaining the present disclosure, and the protection scope of the present disclosure should be subject to the protection scope of the claims.

## Claims

1. A two-speed drive assembly, comprising:
a drive source (1), a transmission mechanism and a reduction mechanism;
**characterized in that**: the transmission mechanism comprises an input shaft (2), an intermediate shaft (3) and an output shaft (4) that are arranged in parallel, the input shaft (2) is connected to the drive source (1) for transmission, the input shaft (2) is provided thereon with a first gear (5), the intermediate shaft (3) is provided thereon with a second gear (6), a third gear (7) and a fourth gear (8), the output shaft (4) is provided thereon with a fifth gear (9) and a sixth gear (10), the first gear (5) and the second gear (6) are meshed for transmission, the third gear (7) and the fifth gear (9) are meshed for transmission, the fourth gear (8) and the sixth gear (10) are meshed for transmission, the third gear (7) and the intermediate shaft (3) are connected for transmission via a clutch or the fifth gear (9) and the output shaft (4) are connected for transmission via a clutch, the fourth gear (8) and the intermediate shaft (3) are connected for transmission via a clutch or the sixth gear (10) and the output shaft (4) are connected for transmission via a clutch;
the reduction mechanism is sleeved on the output shaft (4) and connected to a differential (11) for transmission.

2. The two-speed drive assembly according to claim 1, **characterized in that**: an output shaft (4) of the drive source (1) and the input shaft (2) of the transmission mechanism are an integrated structure.

3. The two-speed drive assembly according to claim 1, **characterized in that**: the output shaft (4) is a hollow shaft, and is sleeved on an output half shaft on a side of the differential (11).

4. The two-speed drive assembly according to claim 3, **characterized in that**: the reduction mechanism comprises a sun gear (12), a planetary gear (13), a ring gear (14) and a planetary carrier (15);
the sun gear (12) is sleeved on the output shaft (4), the ring gear (14) is coaxially sleeved on an outer side of the sun gear (12), the planetary gear (13) is arranged between the sun gear (12) and the ring gear (14) and is respectively meshed with the sun gear (12) and the ring gear (14), the planetary gear (13) is connected to the planetary carrier (15) via a planetary shaft, and the planetary carrier (15) is connected to a housing of the differential (11).

5. The two-speed drive assembly according to claim 4, **characterized in that**: the planetary carrier (15) and the housing of the differential (11) are an integrated structure.

6. The two-speed drive assembly according to claim 1, **characterized in that**: the third gear (7) and the intermediate shaft (3) are connected for transmission via a first clutch (16), and a first needle bearing (17) is provided between the third gear (7) and the intermediate shaft (3); the sixth gear (10) and the output shaft (4) are connected for transmission via a second clutch (18), and a second needle bearing (19) is provided between the sixth gear (10) and the output shaft (4).

7. The two-speed drive assembly according to claim 6, **characterized in that**: the connection between the first gear (5) and the input shaft (2), between the second gear (6) and the intermediate shaft (3), between the fourth gear (8) and the intermediate shaft (3), and between the fifth gear (9) and the output shaft (4) are all by splines.

8. The two-speed drive assembly according to claim 1, **characterized in that**: the fifth gear (9) and the output shaft (4) are connected for transmission via a first clutch (16), and a first needle bearing (17) is provided between the fifth gear (9) and the output shaft (4); the sixth gear (10) and the output shaft (4) are connected for transmission via a second clutch (18), and a second needle bearing (19) is provided between the sixth gear (10) and the output shaft (4).

9. The two-speed drive assembly according to any one of claims 1 to 8, **characterized in that**: a third clutch (20) is provided between a housing of the differential (11) and an output half shaft on a side of the differential (11).

10. A new energy vehicle using the two-speed drive assembly according to any one of claims 1 to 9.
